# EUROPÄISCHE PATENTSCHRIFT

(11) **EP 2 160 529 B1**
(45) Veröffentlichungstag und Bekanntmachung des Hinweises auf die Patenterteilung: **22.12.2010**
(21) Anmeldenummer: 08736603.5
(22) Anmeldetag: 28.04.2008
(51) Int. Cl.: F16H 61/02, F16H 63/42, B60W 30/18

(54) **VERFAHREN ZUR STEUERUNG EINES ANTRIEBSSTRANGS EINES KRAFTFAHRZEUGS**
METHOD FOR CONTROLLING A DRIVE TRAIN OF A MOTOR VEHICLE
PROCÉDÉ DE COMMANDE DE LA TRANSMISSION D'UN VÉHICULE À MOTEUR

(30) Priorität: 24.05.2007 DE 102007024363
(43) Veröffentlichungstag der Anmeldung: 10.03.2010
(73) Patentinhaber: ZF Friedrichshafen AG, 88038 Friedrichshafen (DE)
(72) Erfinder: RONGE, Ludger, 88097 Eriskirch (DE)
(86) Internationale Anmeldenummer: PCT/EP2008/055133
(87) Internationale Veröffentlichungsnummer: WO 2008/141894

(56) Entgegenhaltungen:
- EP-A- 0 584 986
- EP-A- 0 602 685
- EP-A- 0 943 844
- EP-A- 1 016 810
- EP-A- 1 156 236
- DE-A1- 4 315 843
- US-A- 5 664 458

## Beschreibung

Die Erfindung betrifft ein Verfahren zur Steuerung eines Antriebsstrangs eines Kraftfahrzeugs, der einen Antriebsmotor, ein automatisiertes Schaltgetriebe mit mehreren Anfahrgängen und eine im Kraftfluss zwischen dem Antriebsmotor und dem Schaltgetriebe angeordnete automatisierte Kupplung sowie einen zur manuellen Auslösung einer Hochschaltung in eine Hochschaltrichtung und zur manuellen Auslösung einer Rückschaltung in eine Rückschaltrichtung auslenkbaren Handschalthebel umfasst, und bei dem das Schaltgetriebe zusammen mit der Kupplung mittels einer zumindest mit einem Geschwindigkeitssensor, einem Betätigungssensor eines Fahrpedals und einem Betätigungssensor des Handschalthebels in Verbindung stehenden Getriebesteuerungseinheit steuerbar ist, wobei beim Anfahren aus dem Fahrzeugrollen eine von dem Fahrer durch eine Betätigung des Handschalthebels beeinflussbare Bestimmung eines Anfahrgangs erfolgt.

Zur Anpassung an den jeweiligen Fahrwiderstand und an die jeweilige Rollgeschwindigkeit weisen Schaltgetriebe einiger Kraftfahrzeugtypen, insbesondere von schweren Nutzfahrzeugen, mehrere Anfahrgänge auf. Beim Anfahren aus dem Fahrzeugrollen heraus besteht für den Fahrer somit die Schwierigkeit, den dem aktuellen, im Wesentlichen durch den Beladungszustand und die Fahrbahnneigung bestimmten Fahrwiderstand und der aktuellen Rollgeschwindigkeit am besten angepassten Anfahrgang auszuwählen und einzulegen.

Unter dem Begriff Fahrzeugrollen wird in diesem Zusammenhang eine Vorwärtsbewegung des Kraftfahrzeugs innerhalb eines Geschwindigkeitsbereiches verstanden, der oberhalb einer nahe dem Fahrzeugstillstand liegenden unteren Referenzgeschwindigkeit und unterhalb einer höheren, einer geringen Fahrgeschwindigkeit entsprechenden oberen Referenzgeschwindigkeit liegt, wobei sich das Schaltgetriebe in der neutralen Fahrstufe N befindet und/oder die Kupplung vollständig ausgerückt ist. Das Fahrzeugrollen kann aus dem Fahrbetrieb heraus auftreten, z.B. im Stadtverkehr in Form eines Ausrollens vor einer roten Ampel, aus dem dann, in dem gewählten Beispiel nach dem Umschalten der Ampel auf Grün, häufig wieder beschleunigt wird, ohne dass das Kraftfahrzeug vorher zum Stillstand gekommen ist. Das Fahrzeugrollen kann aber auch aus dem Stand heraus auftreten, wenn sich das Kraftfahrzeug auf einer Gefällstrecke befindet und nach dem Lösen der Feststellbremse oder der Betriebsbremse anrollt, ohne dass zuvor schon ein Anfahrgang eingelegt und/oder die Kupplung eingerückt worden ist.

Zwar erfolgt bei einem automatisierten Antriebsstrang der eingangs genannten Art beim Anfahren aus dem Fahrzeugrollen zumeist eine automatische Bestimmung des einzulegenden Anfahrgangs zumindest in Abhängigkeit von der aktuellen Fahr- bzw. Rollgeschwindigkeit und gegebenenfalls des aktuellen Auslenkungsweges des Fahrpedals. Wenn aber nicht zugleich auch der Beladungszustand und/oder die Fahrbahnneigung mit ausreichender Genauigkeit erfasst werden und in die Bestimmung des Anfahrgangs eingehen, kann der automatisch bestimmte Anfahrgang für die aktuelle Fahrsituation ungeeignet sein. In diesem Fall besteht bei einem modernen automatisierten Antriebsstrang die Möglichkeit, dass die Bestimmung des Anfahrgangs von dem Fahrer durch eine Betätigung des Handschalthebels beeinflusst werden kann, oder dass die durch die Getriebesteuereinheit automatisch erfolgte Bestimmung des Anfahrgangs von dem Fahrer durch eine Betätigung des Handschalthebels korrigiert bzw. abgeändert werden kann.

Ein erster gattungsgemäßer Antriebsstrang ist in der EP 0 602 685 B1 beschrieben. Zu diesem bekannten Antriebsstrang gehört auch ein Handschalthebel, der in der Hochschaltrichtung und in der Rückschaltrichtung jeweils eine näher an der Neutralposition liegende erste bzw. dritte Schaltstellung und eine entfernter von der Neutralposition liegende zweite bzw. vierte Schaltstellung aufweist sowie mit mindestens einem Druckschalter versehen ist.

Bei einer oberhalb einer festgelegten Mindestgeschwindigkeit liegenden Fahrgeschwindigkeit wird bei diesem Antriebsstrang mit einer Auslenkung des Handschalthebels in die erste Schaltposition bei einem eingelegten Gang eine Schaltung in den nächsthöheren Gang ausgelöst, sofern mit dem nächsthöheren Gang die Drehzahlgrenzen des Antriebsmotors eingehalten werden; sonst wird das Schaltkommando ignoriert. Bei in seiner Neutralstellung befindlichem Schaltgetriebe oder, wenn gleichzeitig eine Betätigung des Druckschalters erfolgt, wird mit einer Auslenkung des Handschalthebels in die erste Schaltposition dagegen eine Schaltung in den höchsten zulässigen Gang ausgelöst. Mit einer Auslenkung des Handschalthebels in die zweite Schaltposition wird bei überschrittener Mindestgeschwindigkeit und bei einem eingelegten Gang, sofern zulässig, eine Schaltung in den zweithöheren Gang oder gegebenenfalls in den nächsthöheren Gang ausgelöst. Bei in seiner Neutralstellung befindlichem Schaltgetriebe oder, wenn gleichzeitig eine Betätigung des Druckschalters erfolgt, wird mit einer Auslenkung des Handschalthebels in die zweite Schaltposition dagegen ebenfalls eine Schaltung in den höchsten zulässigen Gang ausgelöst.

Mit einer Auslenkung des Handschalthebels in die dritte Schaltposition wird bei überschrittener Mindestgeschwindigkeit und bei einem eingelegten Gang, sofern zulässig, eine Schaltung in den nächstniedrigeren Gang ausgelöst. Bei in seiner Neutralstellung befindlichem Schaltgetriebe oder, wenn gleichzeitig eine Betätigung des Druckschalters erfolgt, wird mit einer Auslenkung des Handschalthebels in die dritte Schaltposition dagegen eine Schaltung in den niedrigsten zulässigen Gang ausgelöst. Mit einer Auslenkung des Handschalthebels in die vierte Schaltposition wird bei überschrittener Mindestgeschwindigkeit und bei einem eingelegten Gang, sofern zulässig, eine Schaltung in den zweitniedrigeren Gang oder gegebenenfalls in den nächstniedrigeren Gang ausgelöst. Bei in seiner Neutralstellung befindlichem Schaltgetriebe oder, wenn gleichzeitig eine Betätigung des Druckschalters erfolgt, wird mit einer Auslenkung des Handschalthebels in die vierte Schaltposition eine Notschaltung in einen noch zulässigen extrem niedrigen Gang ausgelöst.

Der bekannte Antriebsstrang bietet somit eine Vielzahl von Bedienungsmöglichkeiten, die jedoch auch zu Fehlbedienungen durch den Fahrer führen können. Eine Unterscheidung zwischen einem Fahrzeugrollen mit relativ niedriger Fahrgeschwindigkeit und einem geöffneten Antriebsstrang bei höherer Fahrgeschwindigkeit erfolgt allerdings nicht. Die Unterstützung des Fahrers bei der Auswahl eines optimalen Anfahrgangs erfolgt nachteilig nur indirekt, nämlich dadurch, dass das Einlegen eines unzulässigen Gangs verhindert wird.

Ein weiterer gattungsgemäßer Antriebsstrang ist aus der US 5 664 458 A, welche ein Verfahren gemäß dem Oberbegriff des Anspruchs 1 offenbart, bekannt. Bei diesem Antriebsstrang ist ein Handschalthebel vorgesehen, der zur manuellen Auslösung einer Hochschaltung in eine Hochschaltrichtung und zur manuellen Auslösung einer Rückschaltung in eine Rückschaltrichtung auslenkbar ist. Wenn das Schaltgetriebe in seine Neutralstellung geschaltet ist und die aktuelle Fahrgeschwindigkeit oberhalb einer festgelegten minimalen Referenzgeschwindigkeit liegt, wird ein Betriebsmodus "Anfahren aus dem Fahrzeugrollen" aktiviert, innerhalb dem mit einer einzigen Auslenkung des Handschalthebels in die Hochschaltrichtung das Einlegen eines automatisch bestimmten, zur aktuellen Fahrgeschwindigkeit passenden Gangs ausgelöst wird.

Falls der Antriebsstrang eine vom Fahrer über ein Kupplungspedal betätigbare Kupplung aufweist, muss für diese Funktion auch ein Signal eines Betätigungssensors vorliegen, das den geöffneten Zustand der Kupplung anzeigt. Der Fahrer wird somit bei der Wahl des geeigneten Anfahrgangs direkt unterstützt, muss aber hierzu den Handschalthebel betätigen. Da die automatische Bestimmung des Anfahrgangs nur in Abhängigkeit von der aktuellen Fahrgeschwindigkeit erfolgt, kann dieser vorgewählte Anfahrgang unpassend sein, welches gegebenenfalls eine Korrektur durch den Fahrer in Form von weiteren Betätigungen des Handschalthebels erfordert. Eine Unterscheidung zwischen einem Fahrzeugrollen mit relativ niedriger Fahrgeschwindigkeit und einem geöffneten Antriebsstrang bei höherer Fahrgeschwindigkeit erfolgt auch bei diesem Antriebsstrang nicht.

Vor diesem Hintergrund liegt der vorliegenden Erfindung die Aufgabe zugrunde, ein verbessertes Verfahren zur Steuerung eines Antriebsstrangs der eingangs genannten Art anzugeben, mit dem ein Fahrer bei einem Anfahren aus dem Fahrzeugrollen optimal unterstützt wird und die Bestimmung des Anfahrgangs auf einfache Weise beeinflussen kann.

Gemäß dem Oberbegriff des Hauptanspruchs betrifft die Erfindung ein Verfahren zur Steuerung eines Antriebsstrangs eines Kraftfahrzeugs, der einen Antriebsmotor, ein automatisiertes Schaltgetriebe mit mehreren Anfahrgängen, eine im Kraftfluss zwischen dem Antriebsmotor und dem Schaltgetriebe angeordnete automatisierte Kupplung, sowie einen zur manuellen Auslösung einer Hochschaltung in eine Hochschaltrichtung und zur manuellen Auslösung einer Rückschaltung in eine Rückschaltrichtung auslenkbaren Handschalthebel umfasst, und bei dem das Schaltgetriebe zusammen mit der Kupplung mittels einer zumindest mit einem Geschwindigkeitssensor, einem Betätigungssensor eines Fahrpedals und einem Betätigungssensor des Handschalthebels in Verbindung stehenden Getriebesteuerungseinheit steuerbar ist, wobei beim Anfahren aus dem Fahrzeugrollen heraus eine von dem Fahrer durch eine Betätigung des Handschalthebels beeinflussbare Bestimmung eines Anfahrgangs erfolgt

Zur Lösung der gestellten Aufgabe ist zudem vorgesehen, dass beim Vorliegen einer innerhalb eines festgelegten Rollgeschwindigkeitsbereiches liegenden Fahrgeschwindigkeit V_{F} geprüft wird, ob das Schaltgetriebe in Neutral geschaltet Gᵢ = N sowie die Kupplung eingerückt ist X_{K} = 1 ist, und dass in diesem Fall die Kupplung ausgerückt, ein vorgewählter Gang eingelegt, die Kupplung zunächst ausgerückt gehalten und ein Anfahren mit dem vorgewählten Gang in Verbindung mit einem Einrücken der Kupplung ereignisabhängig ausgelöst sowie in Abhängigkeit von der Betätigung des Fahrpedals durchgeführt wird X_{K} = f(x_{FP}), sofern zuvor keine Betätigung des Handschalthebels erfolgt.

Vorteilhafte Ausgestaltungen und Weiterbildungen des erfindungsgemäβen Verfahrens sind Gegenstand der Ansprüche 2 bis 18.

Dadurch, dass bei Vorliegen einer innerhalb des Rollgeschwindigkeitsbereiches liegenden Fahrgeschwindigkeit v_{F} bei in Neutral geschaltetem Schaltgetriebe (Gᵢ = N) ein durch das Schaltprogramm des Schaltgetriebes vorgegebener oder bestimmter Gang eingelegt wird, ist sichergestellt, dass ein Anfahren aus dem Fahrzeugrollen allein mittels einer Betätigung des Fahrpedals durch den Fahrer steuerbar ist. Der Fahrer wird bei der Auswahl eines geeigneten Anfahrgangs somit bestmöglich unterstützt, er hat jedoch auch die Möglichkeit, durch eine entsprechende Betätigung des Handschalthebels einen anderen Anfahrgang zu bestimmen und das Anfahren aus dem Fahrzeugrollen mit diesem anderen Anfahrgang durchzuführen. Die Bedienung zur Auswahl des Anfahrgangs erfolgt somit zwischen zwei oder, wie später noch ersichtlich wird, zwischen maximal drei Gängen und ist für den Fahrer relativ einfach und überschaubar durchführbar. Die Gefahr einer Fehlbedienung durch den Fahrer ist daher gering. Sollte der automatisch vorbestimmte oder durch den Fahrer angewählte Anfahrgang dennoch für den laufenden Anfahrvorgang aus dem Fahrzeugrollen heraus nicht optimal sein, so kann der Fahrer, wie im übrigen Fahrbetrieb auch, jederzeit durch eine entsprechende Betätigung des Handschalthebels eine Hoch- oder Rückschaltung auslösen.

Der Rollgeschwindigkeitsbereich wird zweckmäßig durch eine bei dem Betrag Null oder nahe Null liegende untere Referenzgeschwindigkeit V_{Ref-1} und eine einer niedrigen Fahrgeschwindigkeit entsprechende obere Referenzgeschwindigkeit V_{Ref-2} begrenzt, so dass das Vorliegen einer einer Rollgeschwindigkeit entsprechenden Fahrgeschwindigkeit auf einfache Weise durch einen Vergleich (V_{Ref-1} < V_{F} ≤ V_{Ref-2}) der aktuellen Fahrgeschwindigkeit v_{F} mit den beiden Referenzgeschwindigkeiten v_{Ref-1}, V_{Ref-2} ermittelt werden kann.

Die Fahrgeschwindigkeit v_{F} wird bevorzugt mittels eines an der Ausgangswelle des Schaltgetriebes angeordneten Drehzahlsensors erfasst und an die Getriebesteuerungseinheit weitergeleitet.

Wenn mit Erreichen des Rollgeschwindigkeitsbereiches bereits oder immer noch ein Gang eingelegt (Gᵢ ≠ N) und die Kupplung ausgerückt (x_{K} = 0) ist, erfolgt bevorzugt ein sofortiges Anfahren mit dem eingelegten Gang in Verbindung mit dem Einrücken der Kupplung in Abhängigkeit von der Betätigung des Fahrpedals (x_{K} = f(x_{FP})). Wird der Rollgeschwindigkeitsbereich aus dem Fahrzeugstillstand heraus erreicht, so entspricht der eingelegte Gang einem Anfahrgang für Fahrzeugstillstand bzw. geringer Rollgeschwindigkeit. Wenn der Rollgeschwindigkeitsbereich aus der Fahrt mit höherer Fahrgeschwindigkeit heraus erreicht wird, so entspricht der eingelegte Gang mit hoher Wahrscheinlichkeit einem Anfahrgang für eine hohe Rollgeschwindigkeit. Die Ermittlung eines neuen Anfahrgangs und die Schaltung in diesen Anfahrgang sind daher nicht erforderlich, so dass ein sofortiges Anfahren bzw. Beschleunigen mit dem eingelegten Gang möglich ist.

In einer ersten Verfahrensvariante ist vorgesehen, dass der zur oberen Referenzgeschwindigkeit v_{Ref-2} passende höchste Anfahrgang G_{A-max} als vorgewählter Anfahrgang verwendet wird, und das Anfahren mit dem höchsten Anfahrgang G_{A-max} mit dem Erreichen oder Überschreiten der oberen Referenzgeschwindigkeit v_{Ref-2} durch die Fahrgeschwindigkeit v_{F}, also v_{F} ≥ v_{Ref-2}, ausgelöst wird.

Diese Vorgehensweise zur automatischen Auslösung des Anfahrens mit dem höchsten Anfahrgang G_{A-max} setzt jedoch voraus, dass die Fahrgeschwindigkeit v_{F} innerhalb des Rollgeschwindigkeitsbereiches ansteigt, also eine positive Fahrbeschleunigung (a_{F} > 0) vorliegt, welches jedoch nicht immer der Fall ist. Es ist daher vorteilhaft, wenn das Anfahren mit dem höchsten Anfahrgang G_{A-max} zusätzlich durch den Ablauf einer vorab festgelegten Zeitspanne t_{w} ausgelöst wird (t > t_{w}).

Erfolgt jedoch vor dem Erreichen eines Auslösungskriteriums, also vor dem Erreichen oder Überschreiten der oberen Referenzgeschwindigkeit v_{Ref-2} und vor dem Ablauf der Zeitspanne t_{w}, eine Betätigung des Handschalthebels in Hochschaltrichtung (x_{SH+} = 1), so wird eine Schaltung von dem vorgewählten Gang in den zur momentanen Fahrgeschwindigkeit v_{F} passenden Anfahrgang G_{A-opt} ausgelöst. Das Anfahren mit dem passenden Anfahrgang G_{A-opt} erfolgt dann in Verbindung mit dem Einrücken der Kupplung sofort und in Abhängigkeit von der Betätigung des Fahrpedals (x_{K} = f(x_{FP})).

Bei dieser Verfahrensvariante hat der Fahrer somit die Wahl zwischen dem höchsten Anfahrgang G_{A-max}, der automatisch eingelegt wird, und dem zur momentanen Fahrgeschwindigkeit am besten passenden, also optimalen Anfahrgang G_{A-opt}, dessen Einlegen durch die Betätigung des Handschalthebels in Hochschaltrichtung (x_{SH+} = 1) ausgelöst wird.

Da innerhalb des Rollgeschwindigkeitsbereiches unterschiedliche Fahrzeugbeschleunigungen a_{F} möglich sind, ist es besonders vorteilhaft, wenn zunächst die aktuelle Fahrbeschleunigung a_{F} des Kraftfahrzeugs ermittelt wird, und der vorgewählte Gang sowie das Ereignis zur Auslösung des Anfahrens mit dem vorgewählten Gang in Abhängigkeit der aktuellen Fahrbeschleunigung a_{F} festgelegt werden. Die aktuelle Fahrbeschleunigung a_{F} kann auf einfache Weise als Differenzenquotient aus den beiden zuletzt erfassten Geschwindigkeitswerten v_{F1}, v_{F2} und der Zeitspanne Δt dazwischen gemäß der Gleichung a_{F} = (v_{F2} - v_{F1}) / Δt) berechnet werden.

Demnach ist in einer zweiten Verfahrensvariante vorgesehen, dass bei Vorliegen einer positiven Fahrbeschleunigung (a_{F} > 0, a_{F} > a_{Ref-2} > 0) der zur oberen Referenzgeschwindigkeit v_{Ref-2} passende höchste Anfahrgang G_{A-max} als vorgewählter Anfahrgang verwendet wird, und das Anfahren mit dem höchsten Anfahrgang G_{A-max} bei dem Erreichen oder Überschreiten der oberen Referenzgeschwindigkeit v_{Ref-2} durch die Fahrgeschwindigkeit v_{F} ausgelöst wird (v_{F} ≥ v_{Ref-2}).

Ebenso ist bei dieser Verfahrensvariante vorgesehen, dass bei Vorliegen einer negativen Fahrbeschleunigung (a_{F} < 0, a_{F} < a_{Ref-1} < 0) der zur unteren Referenzgeschwindigkeit v_{Ref-1} passende niedrigste Anfahrgang G_{A-min} als vorgewählter Anfahrgang verwendet wird, und das Anfahren mit dem niedrigsten Anfahrgang G_{A-min} bei dem Erreichen oder Unterschreiten der unteren Referenzgeschwindigkeit v_{Ref-1} durch die Fahrgeschwindigkeit v_{F} ausgelöst wird (v_{F} ≤ v_{Ref-1}).

Bei Vorliegen einer geringen Fahrbeschleunigung (a_{F} ≈ 0) kann entweder ein zur mittleren Fahrgeschwindigkeit des Rollgeschwindigkeitsbereiches passender mittlerer Anfahrgang G_{A-mit} oder alternativ dazu der zur momentanen Fahrgeschwindigkeit v_{F} passende Anfahrgang G_{A-opt} als vorgewählter Anfahrgang verwendet werden, und das Anfahren mit dem mittleren Anfahrgang G_{A-mit} bzw. mit dem passenden Anfahrgang G_{A-opt} durch den Ablauf einer vorab festgelegten Zeitspanne ausgelöst werden (t > t_{w}).

Das Vorliegen einer geringen Fahrbeschleunigung wird bevorzugt durch einen Vergleich der aktuellen Fahrbeschleunigung a_{F} mit einer vorab festgelegten geringen negativen Referenzbeschleunigung (a_{Ref-1} < 0) und einer vorab festgelegten geringen positiven Referenzbeschleunigung (a_{Ref-2} > 0) ermittelt. Sofern die aktuelle Fahrbeschleunigung a_{F} größer/gleich als die negative Referenzbeschleunigung a_{Ref-1} und kleiner/gleich als die positiven Referenzbeschleunigung a_{Ref-2} ist (a_{Ref-1} ≤ a_{F} ≤ a_{Ref-2}), liegt definitionsgemäß eine geringe Fahrbeschleunigung vor.

Auch bei dieser Verfahrensvariante hat der Fahrer jeweils die Wahl zwischen zwei Anfahrgängen, wobei sich jeweils nur der durch das Schaltprogramm vorgewählte Anfahrgang G_{A-max}, G_{A-min,} G_{A-mit}, G_{A-opt} in Abhängigkeit von der Fahrbeschleunigung a_{F} ändert. Bei dem anderen Anfahrgang handelt es sich zweckmäßig um den zur momentanen Fahrgeschwindigkeit v_{F} passenden Anfahrgang G_{A-opt}, in den aus dem vorgewählten Anfahrgang geschaltet wird, wenn vor dem Erreichen des Auslösungskriteriums eine Betätigung des Handschalthebels in Hochschaltrichtung (x_{SH+} = 1) erfolgt.

In einer dritten Verfahrensvariante ist dagegen vorgesehen, dass der zur momentanen Fahrgeschwindigkeit v_{F} passende Anfahrgang G_{A-opt} als vorgewählter Anfahrgang verwendet wird, und das Anfahren mit dem passenden Anfahrgang G_{A-opt} durch den Ablauf einer vorab festgelegten Zeitspanne ausgelöst wird (t > t_{w}).

Bei dieser Verfahrensvariante wird durch eine Betätigung des Handschalthebels in Hochschaltrichtung (x_{SH+} = 1) bevorzugt eine Schaltung von dem vorgewählten Gang in den zulässigen höchsten Anfahrgang (G_{A-max}) ausgelöst, wogegen durch eine Betätigung des Handschalthebels in Rückschaltrichtung (x_{SH}- = 1) bevorzugt eine Schaltung von dem vorgewählten Gang in den niedrigsten Anfahrgang G_{A-min} ausgelöst wird, und das Anfahren jeweils mit dem höchsten bzw. niedrigsten Anfahrgang G_{A-max}, G_{A-min} in Verbindung mit dem Einrücken der Kupplung sofort und in Abhängigkeit der Betätigung des Fahrpedals erfolgt (x_{K} = f(x_{FP})). Der Fahrer kann somit zwischen drei Anfahrgängen auswählen, wobei der vorgewählte Anfahrgang G_{A-opt} automatisch eingelegt wird, und die Nutzung des höchsten Anfahrgangs G_{A-max} und des niedrigste Anfahrgangs G_{A-min} jeweils eine entsprechende Betätigung des Handschalthebels durch den Fahrer erfordern.

Um Fehlbedienungen durch den Fahrer zu vermeiden, werden im Fall eines anfänglich in seiner Neutralstellung N befindlichen Schaltgetriebes der automatisch eingelegte vorgewählte Anfahrgang und die durch eine Betätigung des Handschalthebels einlegbaren Anfahrgänge in einem im Blickfeld des Fahrers angeordneten Display angezeigt. Der Fahrer ist somit stets über die aktuell zur Verfügung stehenden Schaltungsoptionen informiert und kann diese bedarfsweise nutzen.

Zur Verdeutlichung der Erfindung sind der Beschreibung Zeichnungen mit Ausführungsbeispielen beigefügt. In diesen zeigt
- Fig. 1: ein Ablaufdiagramm einer ersten Variante des erfindungsgemäßen Steuerungsverfahrens,
- Fig. 2: ein Ablaufdiagramm einer zweiten Variante des erfindungsgemäßen Steuerungsverfahrens, und
- Fig. 3: ein Ablaufdiagramm einer dritten Variante des erfindungsgemäßen Steuerungsverfahrens.

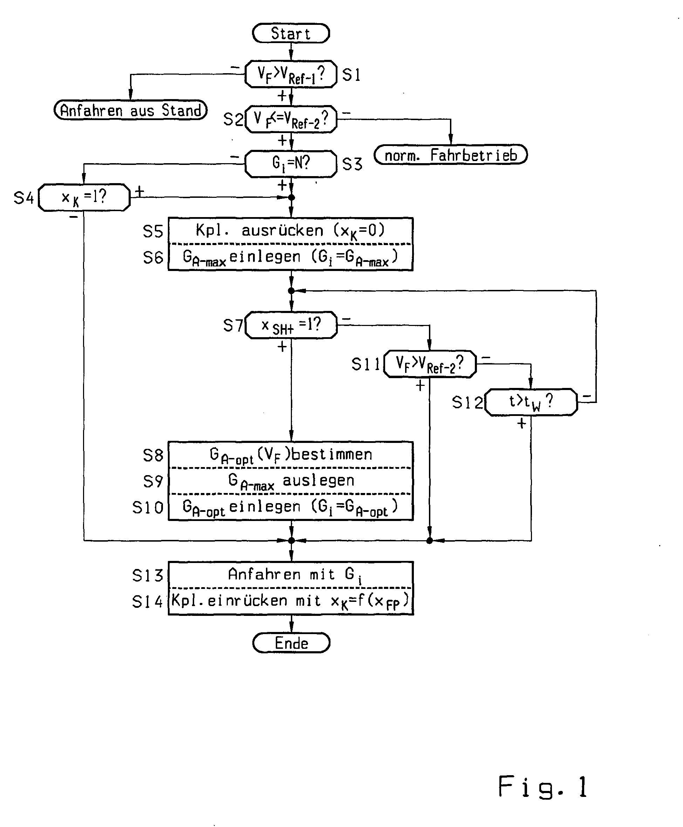

In einer ersten Verfahrensvariante gemäß Fig. 1 wird innerhalb des Steuerungsablaufs einer Getriebesteuerung in Schritt S1 geprüft, ob die aktuelle Fahrgeschwindigkeit v_{F} des Kraftfahrzeugs eine nahe Null liegende untere Referenzgeschwindigkeit v_{Ref-1} überschritten hat (v_{F} > v_{Ref-1}). Falls dies nicht der Fall ist, liegt ein Fahrzeugstillstand vor und es erfolgt die Steuerung eines Anfahrens aus dem Stand. Falls die genannte Bedingung erfüllt ist, wird in Schritt S2 geprüft, ob die aktuelle Fahrgeschwindigkeit v_{F} eine einer geringen Fahrgeschwindigkeit entsprechenden obere Referenzgeschwindigkeit v_{Ref-2} erreicht oder unterschritten hat (v_{F} ≤ v_{Rref-2}). Falls dies nicht der Fall ist, liegt eine normale Fahrgeschwindigkeit vor und es erfolgt eine Steuerung des normalen Fahrbetriebs.

Sind beide Bedingungen erfüllt, so befindet sich das Kraftfahrzeug innerhalb eines Rollgeschwindigkeitsbereiches, der durch die beiden Referenzgeschwindigkeiten v_{Ref-1} und v_{Ref-2} begrenzt ist (v_{Ref-1} < v_{F} ≤ v_{Ref-2}). In diesem Fall wird in Schritt S3 geprüft, ob das Schaltgetriebe in Neutral geschaltet ist, also der eingelegte Gang Gᵢ der neutralen Fahrstufe N entspricht. Wenn dies nicht der Fall ist, wenn also ein Gang eingelegt ist (Gᵢ # N), so wird in Schritt S4 geprüft, ob die Kupplung vollständig eingerückt ist, also der Einrückungsgrad x_{K} der Kupplung gleich 100% oder 1 ist. Wenn dies nicht zutreffend ist, erfolgt mit den Schritten S13 und S14 das Anfahren mit dem eingelegten Gang Gᵢ, wobei die Kupplung ("Kpl.") in Abhängigkeit von der Fahrpedalstellung x_{FP} des von dem Fahrer bedienbaren Fahrpedals eingerückt wird (x_{K} = f(x_{FP})). Falls jedoch ein Gang eingelegt ist oder die Kupplung eingerückt ist, so wird in Schritt S5 die Kupplung ausgerückt (x_{K} = 0) und in Schritt S6 als vorgewählter Anfahrgang ein zur oberen Referenzgeschwindigkeit v_{Ref-2} passender, als höchster Anfahrgang G_{A-max} bezeichneter Anfahrgang eingelegt.

Danach wird zyklisch wiederholt in Schritt S7 überprüft, ob eine Betätigung des Handschalthebels in die Hochschaltrichtung vorliegt (X_{SH+} = 1). Wenn dies der Fall ist, wird mit Schritt S8 ein für die aktuelle Fahrgeschwindigkeit v_{F} passender, also optimaler Anfahrgang G_{A-opt}(v_{F}) bestimmt, nachfolgend in Schritt S9 der zuvor eingelegte höchste Anfahrgang G_{A-Max} wieder ausgelegt, und in Schritt S10 der optimal passende Anfahrgang G_{A-opt} eingelegt. Danach erfolgt mit den Schritten S13 und S14 das Anfahren mit dem eingelegten Anfahrgang Gᵢ = G_{A-0pt} durch Schließen der Kupplung.

Solange jedoch keine Betätigung des Handschalthebels in die Hochschaltrichtung erfolgt, wird mit Schritt S11 geprüft, ob die aktuelle Fahrgeschwindigkeit v_{F} die obere Referenzgeschwindigkeit v_{Ref-2} mit v_{F} > v_{Ref-2} überschritten hat. Wenn dies der Fall ist, erfolgt in den Schritten S13 und S14 das Anfahren mit Kupplungschließen mit dem in diesem Fall eingelegten höchsten Anfahrgang G_{A-max}, der ja zur oberen Referenzgeschwindigkeit v_{Ref-2} passt (Gᵢ= G_{A-max}). Wenn die obere Referenzgeschwindigkeit v_{Ref-2} jedoch nicht überschritten ist, wird in Schritt S12 geprüft, ob eine festgelegte Wartezeit abgelaufen ist (t > t_{w}). Wenn dies zutreffend ist, also die Wartezeit t_{w} abgelaufen ist, erfolgt ebenfalls ein Anfahren mit dem höchsten Anfahrgang G_{A-max}, der ja im Schritt S6 eingelegt wurde. Solange dies aber nicht der Fall ist, wird zu Schritt S7 zurück verzweigt und die geschilderte Abfrageschleife wiederholt.

Dies bedeutet im Ergebnis, dass mit dem höchsten Anfahrgang G_{A-max} angefahren wird, wenn die Fahrgeschwindigkeit v_{F} die obere Referenzgeschwindigkeit v_{Ref-2} überschreitet oder die Wartezeit t_{w} abgelaufen ist, und vorher keine Betätigung des Handschalthebels in Hochschaltrichtung erfolgt ist. Wenn allerdings der Handschalthebel vor dem Überschreiten der oberen Referenzgeschwindigkeit v_{Ref-2} und vor Ablauf der Wartezeit t_{w} in Hochschaltrichtung betätigt wird, so wird sofort mit dem zur aktuellen Fahrgeschwindigkeit v_{F} passenden Anfahrgang G_{A-opt} angefahren.

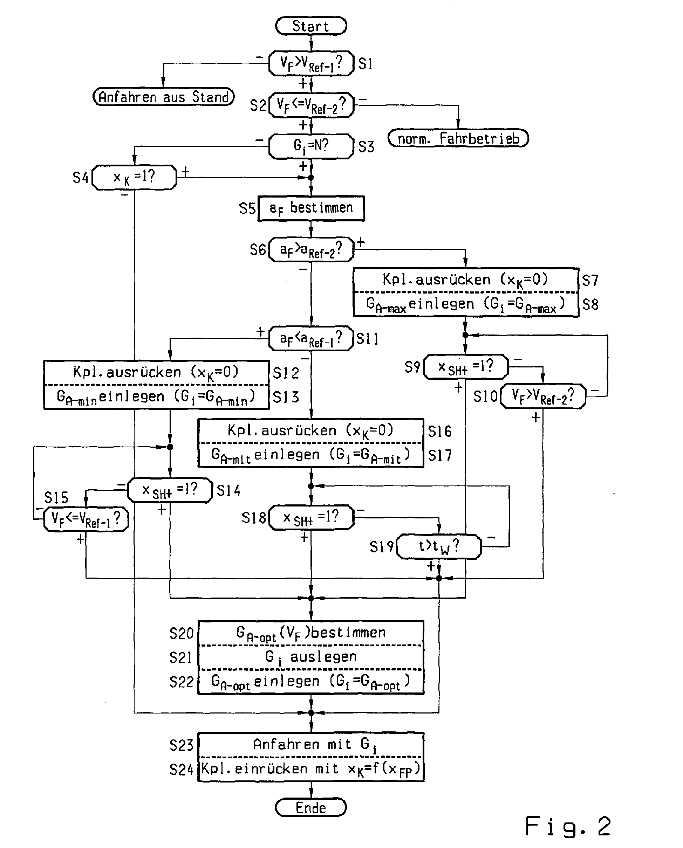

In einer weitergebildeten zweiten Verfahrensvariante gemäß Fig. 2 sind die Schritte S1 bis S4 mit der Variante gemäß Fig. 1 identisch. Im Unterschied zur ersten Variante erfolgt nun eine von der aktuellen Fahrbeschleunigung a_{F} abhängige Bestimmung des vorgewählten Anfahrgangs und des Auslösungskriteriums für eine Anfahrt mit dem vorgewählten Anfahrgang.

Hierzu wird in Schritt S5 die aktuelle Fahrbeschleunigung a_{F} ermittelt. Danach wird in Schritt S6 geprüft, ob die aktuelle Fahrbeschleunigung a_{F} über einer geringen positiven Referenzbeschleunigung a_{Ref-2} liegt. Falls dies zutrifft, wird in Schritt S7 die Kupplung ausgerückt und in Schritt S8 der zur oberen Referenzgeschwindigkeit v_{Ref-2} passende höchste Anfahrgang G_{A}_ₘₐₓ eingelegt.

Nachfolgend wird in Schritt S9 geprüft, ob eine Betätigung des Handschalthebels in die Hochschaltrichtung vorliegt (X_{SH+} = 1). Im positiven Fall erfolgt mit den Schritten S20 bis S22 die Bestimmung des zur aktuellen Fahrgeschwindigkeit v_{F} passenden Anfahrgangs G_{A-opt}, ein Auslegen des aktuellen Gangs und eine Schaltung in diesen passenden Anfahrgangs G_{A-opt}, sowie mit den Schritten S23 und S24 ein Anfahren mit Kupplungsschließen mit eben diesem Gang (Gᵢ = G_{A-opt}), wobei das Einrücken der Kupplung in Abhängigkeit der Fahrpedalstellung x_{FP} erfolgt (x_{K} = f(x_{FP})).

Liegt dagegen keine Betätigung des Handschalthebels in Hochschaltrichtung vor, so wird in Schritt S10 geprüft, ob die aktuelle Fahrgeschwindigkeit v_{F} die obere Referenzgeschwindigkeit v_{Ref-2} überschritten hat. Wenn dies zutrifft, erfolgt mit den Schritten S23 und S24 ein Anfahren mit dem dann eingelegten höchsten Anfahrgang G_{A-max}.

Wenn die obere Referenzgeschwindigkeit v_{Ref-2} aber noch nicht überschritten ist, wird zu Schritt S9 zurück verzweigt. Dies bedeutet, dass bei ausreichend hoher positiver Fahrbeschleunigung (a_{F} > a_{Ref-2}) bei Überschreiten der oberen Referenzgeschwindigkeit v_{Ref-2} mit dem höchsten Anfahrgang G_{A-max} angefahren wird, sofern vorher der Handschalthebel nicht in Hochschaltrichtung betätigt worden ist, welches ein sofortiges Anfahren mit dem optimalen Anfahrgang G_{A-opt} auslösen würde.

Liegt die aktuelle Fahrbeschleunigung a_{F} dagegen, was in Schritt S11 geprüft wird, unterhalb einer geringen negativen Referenzbeschleunigung a_{Ref-1}, so wird in Schritt S12 die Kupplung ausgerückt und in Schritt S13 der zur unteren Referenzgeschwindigkeit v_{Ref-1} passende niedrigste Anfahrgang G_{A_min} eingelegt. Nachfolgend wird in Schritt S14 geprüft, ob eine Betätigung des Handschalthebels in Hochschaltrichtung vorliegt (X_{SH+} = 1). Im positiven Fall erfolgt mit den Schritten S20 bis S22 die Bestimmung des zur aktuellen Fahrgeschwindigkeit v_{F} passenden Anfahrgangs G_{A-opt}, das Auslegen des bisherigen Gangs Gᵢ und eine Schaltung in den optimal passenden Gang, sowie mit den Schritten S23 und S24 ein Anfahren mit Kupplungeinrücken mit diesem optimalen Gang (Gᵢ = G_{A-opt}).

Liegt dagegen keine Betätigung des Handschalthebels in die Hochschaltrichtung vor, so wird in Schritt S15 geprüft, ob die aktuelle Fahrgeschwindigkeit v_{F} die untere Referenzgeschwindigkeit v_{Ref-1} erreicht oder unterschritten hat. Wenn dies zutrifft, erfolgt mit den Schritten S23 und S24 ein Anfahren mit dem dann eingelegten niedrigsten Anfahrgang G_{A-min}. Wenn die untere Referenzgeschwindigkeit v_{Ref-1} aber noch nicht erreicht oder unterschritten ist, wird zu Schritt S14 zurück verzweigt. Dies bedeutet, dass bei ausreichend hoher negativer Fahrbeschleunigung (a_{F} < a_{Ref-1}) bei Erreichen oder Unterschreiten der unteren Referenzgeschwindigkeit v_{Ref-1} mit dem niedrigsten Anfahrgang G_{A-min} angefahren wird, sofern vorher der Handschalthebel nicht in Hochschaltrichtung betätigt worden ist, welches ein sofortiges Anfahren mit dem optimalen Anfahrgang G_{A-opt} auslösen würde.

Falls beide Bedingungen der Schritte S6 und S11 nicht erfüllt sind, also eine geringe, nahe Null liegende Fahrbeschleunigung a_{F} vorliegt, so wird in Schritt S16 die Kupplung ausgerückt und in Schritt S17 ein zu einer mittleren Rollgeschwindigkeit passender mittlerer Anfahrgang G_{A}_ₘᵢₜ eingelegt. Nachfolgend wird in Schritt S18 geprüft, ob eine Betätigung des Handschalthebels in die Hochschaltrichtung vorliegt (X_{SH+} = 1). Im positiven Fall erfolgt mit den Schritten S20 bis S22 die Bestimmung des zur aktuellen Fahrgeschwindigkeit v_{F} passenden Anfahrgangs G_{A-opt}, ein Auslegen des bisherigen Gangs und eine Schaltung in diesen optimal passenden Gang, sowie nachfolgend mit den Schritten S23 und S24 ein Kupplungeinrücken und Anfahren mit diesem optimalen Gang (Gᵢ = G_{A-opt}).

Liegt dagegen keine Betätigung des Handschalthebels in Hochschaltrichtung vor, so wird in Schritt S19 geprüft, ob eine festgelegte Wartezeit t_{w} abgelaufen ist. Wenn dies zutrifft, erfolgt mit den Schritten S23 und S24 ein Kupplungeinrücken und Anfahren mit dem dann eingelegten mittleren Anfahrgang G_{A-mit}. Wenn die Wartezeit t_{w} aber noch nicht abgelaufen ist, wird zu Schritt S18 zurück verzweigt. Dies bedeutet, dass bei geringer Fahrbeschleunigung (a_{Ref-1} ≤ a_{F} ≤ a_{Ref-2}) nach Ablauf der Wartezeit t_{w} mit dem mittleren Anfahrgang G_{A-mit} angefahren wird, sofern vorher der Handschalthebel nicht in Hochschaltrichtung betätigt worden ist, während letzteres ein sofortiges Anfahren mit dem optimalen Anfahrgang G_{A-opt} auslösen würde.

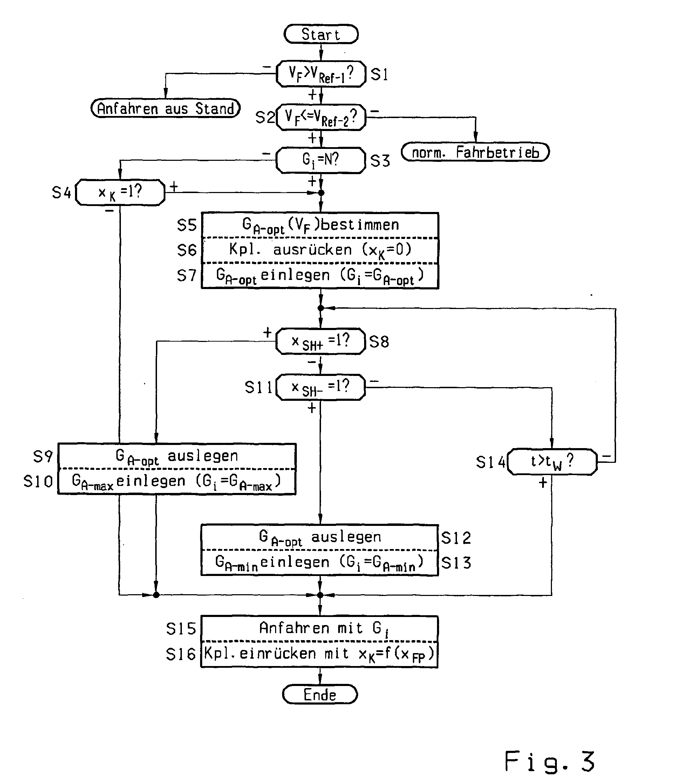

In einer dazu alternativen dritten Verfahrensvariante gemäß Fig. 3 sind die Schritte S1 bis S4 ebenfalls identisch mit der Variante gemäß Fig. 1. Im Unterschied zu der ersten Variante nach Fig. 1 und der zweiten Variante nach Fig. 2 wird nunmehr in den Schritten S5 bis S7 der zur aktuellen Fahrgeschwindigkeit v_{F} passende Anfahrgang G_{A-opt} ermittelt, die Kupplung ausgerückt und der optimal passende Anfahrgang G_{A-opt} als vorgewählter Anfahrgang eingelegt. Eine davon abweichende Auswahl des Anfahrgangs kann der Fahrer nun durch eine Auslenkung des Handschalthebels in Hochschaltrichtung und in Rückschaltrichtung erzielen.

Hierzu wird in Schritt S8 geprüft, ob eine Betätigung des Handschalthebels in die Hochschaltrichtung erfolgt ist (X_{SH+} = 1). Falls dies zutreffend ist, wird in Schritt S9 der eingelegte Anfahrgang G_{A-opt} ausgelegt und der zur oberen Referenzgeschwindigkeit v_{Ref-2} passende höchste Anfahrgang G_{A-max} eingelegt. Nachfolgend erfolgt mit den Schritten S15 und S16 ein Kupplungeinrücken und Anfahren mit diesem passenden höchsten Gang (Gᵢ = G_{A-max}), wobei das Einrücken der Kupplung in Abhängigkeit der Fahrpedalstellung x_{FP} gesteuert wird (x_{K} = f(x_{FP})).

Falls die Überprüfung in Schritt S8 negativ ausfällt, wird nachfolgend in Schritt S11 geprüft, ob eine Betätigung des Handschalthebels in die Rückschaltrichtung vorliegt (X_{SH-} = 1). Falls dies der Fall ist, wird in Schritt S12 der eingelegte Anfahrgang G_{A-opt} ausgelegt und der zur unteren Referenzgeschwindigkeit V_{Ref-1} passende niedrigste Anfahrgang G_{A-min} eingelegt. Nachfolgend erfolgt nun mit den Schritten S15 und S16 ein Kupplungseinrücken und Anfahren mit dem eingelegten passenden niedrigsten Anfahrgang (Gᵢ = G_{A-min}).

Falls beide Bedingungen der Schritte S8 und S11 nicht erfüllt sind, also keine Betätigung des Handschalthebels zu verzeichnen ist, wird in Schritt S14 geprüft, ob eine festgelegte Wartezeit t_{w} abgelaufen ist. Wenn dies noch nicht geschehen ist, wird zu Schritt S8 zurück verzweigt, so dass die Prüfschritte von Schritt S8 und Schritt S11 bei jeweils negativem Ergebnis mehrfach durchlaufen werden. Wenn jedoch die Wartezeit t_{w} abgelaufen ist (t > t_{w}), erfolgt mit den Schritten S15 und S16 ein Kupplungeinrücken und Anfahren mit dem in diesem Fall noch eingelegten optimalen Anfahrgang G_{A-opt}.

Dies bedeutet, dass mit dem zur aktuellen Fahrgeschwindigkeit v_{F} passenden Anfahrgang G_{A-opt} angefahren wird, wenn die Wartezeit t_{w} abgelaufen ist und vorher keine Betätigung des Handschalthebels erfolgt ist. Wenn allerdings der Handschalthebel vor dem Ablauf der Wartezeit t_{w} betätigt wird, so wird bei einer Betätigung in die Hochschaltrichtung sofort mit dem zur oberen Referenzgeschwindigkeit v_{Ref-2} passenden höchsten Anfahrgang G_{A-max} und bei einer Betätigung in die Rückschaltrichtung sofort mit dem zur unteren Referenzgeschwindigkeit v_{Ref-1} passenden niedrigsten Anfahrgang G_{A-min} angefahren.

### Bezugszeichen

- a_{F}: Fahrbeschleunigung
- a_{Ref-1}: Negative Referenzbeschleunigung
- a_{Ref-2}: Positive Referenzbeschleunigung
- G_{A}: Anfahrgang
- G_{A-max}: Höchster Anfahrgang
- G_{A-min}: Niedrigster Anfahrgang
- G_{A-mit}: Mittlerer Anfahrgang
- G_{A-opt}: Optimaler Anfahrgang
- Gᵢ: Eingelegter Gang
- N: Neutralgang, Neutralstellung
- S1-S24: Verfahrensschritte
- t: Zeit
- t_{W}: Zeitspanne, Wartezeit
- v_{F}: Fahrgeschwindigkeit
- v_{F1}: Erster Geschwindigkeitswert
- v_{F2}: Zweiter Geschwindigkeitswert
- V_{Ref-1}: Untere Referenzgeschwindigkeit
- v_{Ref-2}: Obere Referenzgeschwindigkeit
- X_{FP}: Fahrpedalstellung, Auslenkung des Fahrpedals
- X_{K}: Einrückungsgrad der Kupplung
- X_{SH+}: Auslenkung des Handschalthebels in Hochschaltrichtung
- X_{SH-}: Auslenkung des Handschalthebels in Rückschaltrichtung
- Δt: Zeitspanne

## Patentansprüche

1. Verfahren zur Steuerung eines Antriebsstrangs eines Kraftfahrzeugs, der einen Antriebsmotor, ein automatisiertes Schaltgetriebe mit mehreren Anfahrgängen und eine im Kraftfluss zwischen dem Antriebsmotor und dem Schaltgetriebe angeordnete automatisierte Kupplung sowie einen zur manuellen Auslösung einer Hochschaltung in eine Hochschaltrichtung und zur manuellen Auslösung einer Rückschaltung in eine Rückschaltrichtung auslenkbaren Handschalthebel umfasst, und bei dem das Schaltgetriebe zusammen mit der Kupplung mittels einer zumindest mit einem Geschwindigkeitssensor, einem Betätigungssensor eines Fahrpedals und einem Betätigungssensor des Handschalthebels in Verbindung stehenden Getriebesteuerungseinheit steuerbar ist, wobei beim Anfahren aus dem Fahrzeugrollen heraus eine von dem Fahrer durch eine Betätigung des Handschalthebels beeinflussbare Bestimmung eines Anfahrgangs erfolgt, **dadurch gekennzeichnet, dass** beim Vorliegen einer innerhalb eines festgelegten Rollgeschwindigkeitsbereiches liegenden Fahrgeschwindigkeit (v_{F}) geprüft wird, ob das Schaltgetriebe in Neutral geschaltet (Gᵢ = N) sowie die Kupplung eingerückt ist (x_{K} = 1) ist, und dass in diesem Fall die Kupplung ausgerückt, ein vorgewählter Gang eingelegt, die Kupplung zunächst ausgerückt gehalten und ein Anfahren mit dem vorgewählten Gang in Verbindung mit einem Einrücken der Kupplung ereignisabhängig ausgelöst sowie in Abhängigkeit von der Betätigung des Fahrpedals durchgeführt wird (x_{K} = f(x_{FP})), sofern zuvor keine Betätigung des Handschalthebels erfolgt.

2. Verfahren nach Anspruch 1, **dadurch gekennzeichnet, dass** der Rollgeschwindigkeitsbereich durch eine bei dem Wert Null oder nahe Null liegende untere Referenzgeschwindigkeit (v_{Ref-1}) und eine einer niedrigen Fahrgeschwindigkeit entsprechende obere Referenzgeschwindigkeit (v_{Ref-2}) begrenzt ist, und dass das Vorliegen einer einer Rollgeschwindigkeit entsprechenden Fahrgeschwindigkeit durch einen Vergleich der aktuellen Fahrgeschwindigkeit (v_{F}) mit den beiden Referenzgeschwindigkeiten (v_{Ref-1}, v_{Ref-2}) gemäß der Ungleichung v_{Ref-1} < v_{F} ≤ v_{Ref-2} ermittelt wird.

3. Verfahren nach Anspruch 1 oder 2, **dadurch gekennzeichnet, dass** die Fahrgeschwindigkeit (v_{F}) mittels eines an der Ausgangswelle des Schaltgetriebes angeordneten Drehzahlsensors erfasst wird.

4. Verfahren nach zumindest einem der Ansprüche 1 bis 3, **dadurch gekennzeichnet, dass** bei eingelegtem Gang (Gᵢ ≠ N) und ausgerückter Kupplung (x_{K} = 0) ein Anfahren mit dem eingelegten Gang in Verbindung mit dem Einrücken der Kupplung sofort und in Abhängigkeit von der Betätigung des Fahrpedals (x_{K} = f(x_{FP})) erfolgt.

5. Verfahren nach zumindest einem der Ansprüche 1 bis 4, **dadurch gekennzeichnet, dass** der zur oberen Referenzgeschwindigkeit (v_{Ref-2}) passende höchste Anfahrgang (G_{A-max}) als vorgewählter Anfahrgang verwendet wird, und das Anfahren mit dem höchsten Anfahrgang (G_{A-max}) mit dem Erreichen oder Überschreiten (v_{F} ≥ v_{Ref-2}) der oberen Referenzgeschwindigkeit (v_{Ref-2}) durch die Fahrgeschwindigkeit (v_{F}) ausgelöst wird.

6. Verfahren nach Anspruch 5, **dadurch gekennzeichnet, dass** das Anfahren mit dem höchsten Anfahrgang (G_{A-max}) zusätzlich in Abhängigkeit von dem Ablauf (t > t_{w}) einer vorab festgelegten Zeitspanne (t_{w})ausgelöst wird.

7. Verfahren nach zumindest einem der Ansprüche 1 bis 4, **dadurch gekennzeichnet, dass** die aktuelle Fahrbeschleunigung (a_{F}) des Kraftfahrzeugs ermittelt wird, und der vorgewählte Gang und das Ereignis zur Auslösung des Anfahrens mit dem vorgewählten Gang in Abhängigkeit der aktuellen Fahrbeschleunigung (a_{F}) festgelegt werden.

8. Verfahren nach Anspruch 7, **dadurch gekennzeichnet, dass** die aktuelle Fahrbeschleunigung (a_{F}) als Differenzenquotient (a_{F} = (v_{F2} - v_{F1}) / Δt) aus den beiden zuletzt erfassten Geschwindigkeitswerten (vV_{F1}, v_{F2}) und der Zeitspanne dazwischen (Δt) berechnet wird.

9. Verfahren nach Anspruch 7 oder 8, **dadurch gekennzeichnet, dass** beim Vorliegen einer positiven Fahrbeschleunigung (a_{F} > 0, a_{F} > a_{Ref-2} > 0) der zur oberen Referenzgeschwindigkeit (v_{Ref}-₂) passende höchste Anfahrgang (G_{A-max}) als vorgewählter Anfahrgang verwendet wird, und das Anfahren mit dem höchsten Anfahrgang (G_{A-max}) mit dem Erreichen oder Überschreiten (v_{F} ≥ v_{Ref-2}) der oberen Referenzgeschwindigkeit (v_{Ref-2}) durch die Fahrgeschwindigkeit (v_{F}) ausgelöst wird.

10. Verfahren nach zumindest einem der Ansprüche 7 bis 9, **dadurch gekennzeichnet, dass** beim Vorliegen einer negativen Fahrbeschleunigung (a_{F} < 0, a_{F} ≤ a_{Ref-1}< 0) der zur unteren Referenzgeschwindigkeit (v_{Ref-1}) passende niedrigste Anfahrgang (G_{A-min}) als vorgewählter Anfahrgang verwendet wird, und das Anfahren mit dem niedrigsten Anfahrgang (G_{A-min}) mit dem Erreichen oder Unterschreiten (v_{F} ≤ v_{Ref-1}) der unteren Referenzgeschwindigkeit (v_{Ref-1}) durch die Fahrgeschwindigkeit (v_{F}) ausgelöst wird.

11. Verfahren nach zumindest einem der Ansprüche 7 bis 10, **dadurch gekennzeichnet, dass** beim Vorliegen einer geringen Fahrbeschleunigung (a_{F} ≈ 0) ein zur mittleren Fahrgeschwindigkeit des Rollgeschwindigkeitsbereiches passender mittlerer Anfahrgang (G_{A-mit}) als vorgewählter Anfahrgang verwendet wird, und das Anfahren mit dem mittleren Anfahrgang (G_{A-mit}) durch den Ablauf (t > t_{w}) einer vorab festgelegten Zeitspanne (tw) ausgelöst wird.

12. Verfahren nach zumindest einem der Ansprüche 7 bis 10, **dadurch gekennzeichnet, dass** beim Vorliegen einer geringen Fahrbeschleunigung (a_{F} ≈ 0) ein zur momentanen Fahrgeschwindigkeit (v_{F}) passender Anfahrgang (G_{A-opt}) als vorgewählter Anfahrgang verwendet wird, und das Anfahren mit dem passenden Anfahrgang (G_{A-opt}) durch den Ablauf (t > t_{w}) einer vorab festgelegten Zeitspanne (t_{w}) ausgelöst wird.

13. Verfahren nach Anspruch 11 oder 12, **dadurch gekennzeichnet, dass** das Vorliegen einer geringen Fahrbeschleunigung durch einen Vergleich (a_{Ref-1} ≤ a_{F} ≤ a_{Ref-2}) der aktuellen Fahrbeschleunigung (a_{F}) mit einer vorab festgelegten geringen negativen Referenzbeschleunigung (a_{Ref-1} < 0) und einer vorab festgelegten geringen positiven Referenzbeschleunigung (a_{Ref-2} > 0) ermittelt wird.

14. Verfahren nach zumindest einem der Ansprüche 1 bis 13, **dadurch gekennzeichnet, dass** bei einer Betätigung des Handschalthebels in Hochschaltrichtung (x_{SH+} = 1) eine Schaltung von dem vorgewählten Gang in den zur momentanen Fahrgeschwindigkeit (v_{F}) passenden Anfahrgang (G_{A-opt}) ausgelöst wird, und das Anfahren mit dem passenden Anfahrgang (G_{A-opt}) in Verbindung mit dem Einrücken der Kupplung sofort und in Abhängigkeit (x_{K} = f(x_{FP})) von der Betätigung des Fahrpedals erfolgt.

15. Verfahren nach zumindest einem der Ansprüche 1 bis 4, **dadurch gekennzeichnet, dass** ein zur momentanen Fahrgeschwindigkeit (v_{F}) passender Anfahrgang (G_{A-opt}) als vorgewählter Anfahrgang verwendet wird, und das Anfahren mit dem passenden Anfahrgang (G_{A-opt}) durch den Ablauf (t > t_{w}) einer vorab festgelegten Zeitspanne (t_{w}) ausgelöst wird.

16. Verfahren nach Anspruch 15, **dadurch gekennzeichnet, dass** bei einer Betätigung des Handschalthebels in die Hochschaltrichtung (x_{SH+} = 1) eine Schaltung von dem vorgewählten Gang in den höchsten Anfahrgang (G_{A-max}) ausgelöst wird, und das Anfahren mit dem höchsten Anfahrgang (G_{A-max}) in Verbindung mit dem Einrücken der Kupplung sofort und in Abhängigkeit (x_{K} = f(x_{FP})) von der Betätigung des Fahrpedals erfolgt.

17. Verfahren nach Anspruch 15 oder 16, **dadurch gekennzeichnet, dass** bei einer Betätigung des Handschalthebels in Rückschaltrichtung (x_{SH-} = 1) eine Schaltung von dem vorgewählten Gang in den niedrigsten Anfahrgang (G_{A-min}) ausgelöst wird, und das Anfahren mit dem niedrigsten Anfahrgang (G_{A-min}) in Verbindung mit dem Einrücken der Kupplung sofort und in Abhängigkeit (x_{K} = f(x_{FP})) von der Betätigung des Fahrpedals erfolgt.

18. Verfahren nach zumindest einem der Ansprüche 1 bis 17, **dadurch gekennzeichnet, dass** im Fall eines anfänglich im Leerlauf befindlichen Schaltgetriebes der automatisch eingelegte vorgewählte Anfahrgang und die durch eine Betätigung des Handschalthebels einlegbaren Anfahrgänge in einem im Blickfeld des Fahrers angeordneten Display angezeigt werden.

## Claims

1. Method for controlling a drive train of a motor vehicle, which drive train comprises a drive engine, an automated change-speed gearbox with a plurality of moving-off gears, an automated clutch which is arranged in the force flow between the drive engine and the change-speed gearbox, and a manual gearshift lever which can be deflected in a change-up direction to manually trigger an upshift and in a change-down direction to manually trigger a downshift, and in which the change-speed gearbox can be controlled together with the clutch by means of a gearbox control unit which is connected at least to a speed sensor, an actuating sensor of an accelerator pedal and an actuating sensor of the manual gearshift lever, a determination of a moving-off operation which can be influenced by the driver by way of an actuation of the manual gearshift lever taking place when moving off from rolling of the vehicle, **characterized in that**, in the case of a driving speed (v_{F}) which lies within a fixed rolling speed range, a check is carried out as to whether the change-speed gearbox is shifted into neutral (Gᵢ = N) and the clutch is engaged (x_{K} = 1), and **in that**, in this case, the clutch is released, a preselected gear is engaged, the clutch is first of all kept released and moving off with the preselected gear is triggered in conjunction with engagement of the clutch as a function of events and is carried out as a function of the actuation of the accelerator pedal (x_{K} = f(x_{FP})), as long as previously no actuation of the manual gearshift lever takes place.

2. Method according to Claim 1, **characterized in that** the rolling speed range is limited by a lower reference speed (v_{Ref-1}) which lies at the value zero or near zero and an upper reference speed (v_{Ref-2}) which corresponds to a low driving speed, and **in that** the presence of a driving speed which corresponds to a rolling speed is determined by a comparison of the current driving speed (v_{F}) with the two reference speeds (v_{Ref-1}, v_{Ref-2}) according to the inequality v_{Ref-1} < v_{F} ≤ v_{Ref-2}.

3. Method according to Claim 1 or 2, **characterized in that** the driving speed (v_{F}) is detected by means of a speed sensor which is arranged on the output shaft of the change-speed gearbox.

4. Method according to at least one of Claims 1 to 3, **characterized in that**, if a gear is selected (Gᵢ ≠ N) and the clutch is released (x_{K} = 0), moving off takes place with the selected gear in conjunction with the engagement of the clutch immediately and as a function of the actuation of the accelerator pedal (x_{K} = f(x_{FP})).

5. Method according to at least one of Claims 1 to 4, **characterized in that** the highest moving-off gear (G_{A-max}) which suits the upper reference speed (v_{Ref-2}) is used as a preselected moving-off gear, and the moving off with the highest moving-off gear (G_{A-max}) is triggered by the driving speed (v_{F}) reaching or exceeding (v_{F} ≥ v_{Ref-2}) the upper reference speed (v_{Ref-2}).

6. Method according to Claim 5, **characterized in that** the moving off with the highest moving-off gear (G_{A-max}) is triggered additionally as a function of the end (t > t_{w}) of a time period (t_{w}) which is fixed in advance.

7. Method according to at least one of Claims 1 to 4, **characterized in that** the current driving acceleration (a_{F}) of the motor vehicle is determined, and the preselected gear and the event for triggering the moving off with the preselected gear are fixed as a function of the current driving acceleration (a_{F}).

8. Method according to Claim 7, **characterized in that** the current driving acceleration (a_{F}) is calculated as a differential quotient (a_{F} = (v_{F2} - v_{F1}) /Δt) from the two speed values (v_{F1}, v_{F2}) detected last and the time period (Δt) between them.

9. Method according to Claim 7 or 8, **characterized in that**, in the presence of a positive driving acceleration (a_{F} > 0, a_{F} > a_{Ref-2} > 0), the highest moving-off gear (G_{A-max}) which suits the upper reference speed (v_{Ref-2}) is used as preselected moving-off gear, and the moving off with the highest moving-off gear (G_{A-max}) is triggered by the driving speed (v_{F}) reaching or exceeding (v_{F} ≥ v_{Ref-2}) the upper reference speed (v_{Ref-2}).

10. Method according to at least one of Claims 7 to 9, **characterized in that**, in the presence of a negative driving acceleration (a_{F} < 0, a_{F} ≤ a_{Ref-1} < 0), the lowest moving-off gear (G_{A-min}) which suits the lower reference speed (v_{Ref-1}) is used as preselected moving-off gear, and the moving off with the lowest moving-off gear (G_{A-min}) is triggered by the driving speed (v_{F}) reaching or undershooting (v_{F} ≤ v_{Ref-1}) the lower reference speed (v_{Ref-1}).

11. Method according to at least one of Claims 7 to 10, **characterized in that**, in the presence of a low driving acceleration (a_{F} ≈ 0), a medium moving-off gear (G_{A-mit}) which suits the medium driving speed of the rolling speed range is used as preselected moving-off gear, and the moving off with the medium moving-off gear (G_{A-mit}) is triggered after the end (t > t_{w}) of a time period (t_{w}) which is fixed in advance.

12. Method according to at least one of Claims 7 to 10, **characterized in that**, in the presence of a low driving acceleration (a_{F} ≈ 0), a moving-off gear (G_{A-opt}) which suits the instantaneous driving speed (v_{F}) is used as preselected moving-off gear, and the moving off with the suitable moving-off gear (G_{A-opt}) is triggered by the end (t > t_{w}) of a time period (t_{w}) which is fixed in advance.

13. Method according to Claim 11 or 12, **characterized in that** the presence of a low driving acceleration is determined by a comparison (a_{Ref-1} ≤ a_{F} ≤a_{Ref-2}) of the current driving acceleration (a_{F}) with a low negative reference acceleration (a_{Ref-1} < 0) which is fixed in advance and a low positive reference acceleration (a_{Ref-2} > 0) which is fixed in advance.

14. Method according to at least one of Claims 1 to 13, **characterized in that**, in the case of an actuation of the manual gearshift lever in the change-up direction (x_{SH+} = 1), a shift is triggered from the preselected gear into the moving-off gear (G_{A-opt}) which suits the instantaneous driving speed (v_{F}), and the moving off with the suitable moving-off gear (G_{A-opt}) takes place in conjunction with the engagement of the clutch immediately and as a function (x_{K} = f(x_{FP})) of the actuation of the accelerator pedal.

15. Method according to at least one of Claims 1 to 4, **characterized in that** a moving-off gear (G_{A-opt}) which suits the instantaneous driving speed (v_{F}) is used as preselected moving-off gear, and the moving off with the suitable moving-off gear (G_{A-opt}) is triggered by the end (t > t_{w}) of a time period (t_{w}) which is fixed in advance.

16. Method according to Claim 15, **characterized in that**, in the case of an actuation of the manual gearshift lever in the change-up direction (x_{SH+} = 1), a shift is triggered from the preselected gear into the highest moving-off gear (G_{A-max}), and the moving off with the highest moving-off gear (G_{A-max}) takes place in conjunction with the engagement of the clutch immediately and as a function (x_{K} = f(x_{FP}) of the actuation of the accelerator pedal.

17. Method according to Claim 15 or 16, **characterized in that**, in the case of an actuation of the manual gearshift lever in the change-down direction (x_{SH}- = 1), a shift is triggered from the preselected gear into the lowest moving-off gear (G_{A-min}) , and the moving off with the lowest moving-off gear (G_{A-min}) takes place in conjunction with the engagement of the clutch immediately and as a function (x_{K} = f(x_{FP}) of the actuation of the accelerator pedal.

18. Method according to at least one of Claims 1 to 17, **characterized in that**, in the case of a change-speed gearbox which is initially in neutral, the automatically engaged preselected moving-off gear and the moving-off gears which can be engaged by an actuation of the manual gearshift lever, are indicated in a display which is arranged in the field of view of the driver.

## Revendications

1. Procédé de commande d'une chaîne motrice d'un véhicule automobile, laquelle comprend un moteur d'entraînement, une boîte de vitesses automatisée ayant plusieurs rapports de démarrage et un accouplement automatisé disposé dans le flux des forces entre le moteur d'entraînement et la boîte de vitesses ainsi qu'un levier de changement de rapport manuel qui peut être dévié pour déclencher manuellement un changement de rapport dans le sens d'un rapport supérieur et pour déclencher manuellement un changement de rapport dans le sens d'un rapport inférieur, et selon lequel la boîte de vitesses peut être commandée conjointement avec l'accouplement au moyen d'une unité de commande de boîte de vitesses qui est en liaison avec au moins un capteur de vitesse, un capteur d'actionnement d'une pédale d'accélération et un capteur d'actionnement du levier de changement de rapport manuel, une détermination d'un rapport de démarrage qui peut être influencée par le conducteur en actionnant le levier de changement de rapport manuel ayant lieu lors du démarrage depuis le roulage du véhicule, **caractérisé en ce qu'**en présence d'une vitesse de déplacement (v_{F}) qui se trouve à l'intérieur d'une plage de vitesses de roulage fixée, un contrôle est effectué pour vérifier si la boîte de vitesses se trouve en position neutre (Gᵢ = N) et si l'accouplement est embrayé (x_{K} = 1) et que dans ce cas l'accouplement est débrayé, un rapport présélectionné est engagé, l'accouplement est tout d'abord maintenu débrayé et un démarrage avec le rapport présélectionné en combinaison avec un embrayage de l'accouplement est déclenché en fonction de l'événement et aussi exécuté en fonction de l'actionnement de la pédale d'accélération (x_{K} = f(x_{FP})), sous réserve qu'aucun actionnement du levier de changement de rapport manuel n'a préalablement eu lieu.

2. Procédé selon la revendication 1, **caractérisé en ce que** la plage de vitesses de roulage est délimitée par une vitesse de référence inférieure (v_{Ref-1}) égale à zéro ou proche de la valeur zéro et par une vitesse de référence supérieure (v_{Ref-2}) correspondant à une faible vitesse de déplacement, et que la présence d'une vitesse de déplacement correspondant à une vitesse de roulage est déterminée par une comparaison entre la vitesse de déplacement actuelle (v_{F}) avec les deux vitesses de référence (v_{Ref-1}, v_{Ref-2}) selon l'inégalité v_{Ref-1} < v_{F} ≤ v_{Ref-2}.

3. Procédé selon la revendication 1 ou 2, **caractérisé en ce que** la vitesse de déplacement (v_{F}) est détectée au moyen d'un détecteur de vitesse de rotation disposé sur l'arbre de sortie de la boîte de vitesses.

4. Procédé selon au moins l'une des revendications 1 à 3, **caractérisé en ce que** lorsqu'un rapport est engagé (Gᵢ ≠ N) et que l'accouplement est débrayé (x_{K} = 0), un démarrage avec le rapport engagé en combinaison avec l'embrayage de l'accouplement a lieu immédiatement et en fonction de l'actionnement de la pédale d'accélération (x_{K} = f(x_{FP})).

5. Procédé selon au moins l'une des revendications 1 à 4, **caractérisé en ce que** le rapport de démarrage le plus élevé (G_{A-maX}) adapté à la vitesse de référence supérieure (v_{Ref-2}) est utilisé comme rapport de démarrage présélectionné et le démarrage avec le rapport de démarrage le plus élevé (G_{A-maX}) est déclenché lorsque la vitesse de référence supérieure (v_{Ref-2}) est atteinte ou dépassée (v_{F} ≥ v_{Ref-2}) par la vitesse de déplacement (v_{F}).

6. Procédé selon la revendication 5, **caractérisé en ce que** le démarrage avec le rapport de démarrage le plus élevé (G_{A-maX}) est en plus déclenché en fonction de l'écoulement (t > t_{w}) d'un intervalle de temps (t_{w}) préalablement fixé.

7. Procédé selon au moins l'une des revendications 1 à 4, **caractérisé en ce que** l'accélération de marche (a_{F}) actuelle du véhicule automobile est déterminée et le rapport présélectionné ainsi que l'événement pour le déclenchement du démarrage avec le rapport présélectionné sont fixés en fonction de l'accélération de marche (a_{F}) actuelle.

8. Procédé selon la revendication 7, **caractérisé en ce que** l'accélération de marche (a_{F}) actuelle est calculée sous la forme d'un quotient de différence (a_{F} = (v_{F2} - v_{F1}) / Δt) à partir des deux valeurs de la vitesse (v_{F1}, v_{F2}) détectées en dernier et de l'intervalle de temps (Δt) entre celles-ci.

9. Procédé selon la revendication 7 ou 8, **caractérisé en ce qu'**en présence d'une accélération de marche positive (a_{F} > 0, a_{F} > a_{Ref-2} > 0), le rapport de démarrage le plus élevé (G_{A-max}) adapté à la vitesse de référence supérieure (v_{Ref-2}) est utilisé comme rapport de démarrage présélectionné et le démarrage avec le rapport de démarrage le plus élevé (G_{A-max}) est déclenché lorsque la vitesse de référence supérieure (v_{Ref-2}) est atteinte ou dépassée (v_{F} ≥ v_{Ref-2}) par la vitesse de déplacement (v_{F}).

10. Procédé selon au moins l'une des revendications 7 à 9, **caractérisé en ce qu'**en présence d'une accélération de marche négative (a_{F} < 0, a_{F} ≤ a_{Ref-1} < 0), le rapport de démarrage le plus bas (G_{A-min}) adapté à la vitesse de référence inférieure (v_{Ref-1}) est utilisé comme rapport de démarrage présélectionné et le démarrage avec le rapport de démarrage le plus bas (G_{A-min}) est déclenché lorsque la vitesse de déplacement (v_{F}) devient égale ou inférieure (v_{F} ≤ v_{Ref-1}) à la vitesse de référence inférieure (v_{Ref-1}).

11. Procédé selon au moins l'une des revendications 7 à 10, **caractérisé en ce qu'**en présence d'une faible accélération de marche (a_{F} ≈ 0), un rapport de démarrage moyen (G_{A-mit}) adapté à la vitesse de déplacement centrale de la plage de vitesses de roulage est utilisé comme rapport de démarrage présélectionné et le démarrage avec le rapport de démarrage moyen (G_{A-mit}) est déclenché par l'écoulement (t > t_{w}) d'un intervalle de temps (t_{w}) préalablement fixé.

12. Procédé selon au moins l'une des revendications 7 à 10, **caractérisé en ce qu'**en présence d'une faible accélération de marche (a_{F} ≈ 0), un rapport de démarrage (G_{A-opt}) adapté à la vitesse de déplacement momentanée (v_{F}) est utilisé comme rapport de démarrage présélectionné et le démarrage avec le rapport de démarrage adapté (G_{A-opt}) est déclenché par l'écoulement (t > t_{w}) d'un intervalle de temps (t_{w}) préalablement fixé.

13. Procédé selon la revendication 11 ou 12, **caractérisé en ce que** la présence d'une faible accélération de marche est déterminée par une comparaison (a_{Ref-1} ≤ a_{F} ≤ a_{Ref-2}) de l'accélération de marche actuelle (a_{F}) avec une accélération de référence négative faible (a_{Ref-1} < 0) préalablement fixée et une accélération de référence positive faible (a_{Ref-2} > 0) préalablement fixée.

14. Procédé selon au moins l'une des revendications 1 à 13, **caractérisé en ce que** lors d'un actionnement du levier de changement de rapport manuel dans le sens d'un rapport supérieur (x_{SH+} = 1), un changement de rapport du rapport présélectionné vers le rapport de démarrage (G_{A-opt}) adapté à la vitesse de déplacement momentanée (v_{F}) est déclenché et le démarrage avec le rapport de démarrage adapté (G_{A-opt}) s'effectue en combinaison avec l'embrayage immédiat de l'accouplement et en fonction de l'actionnement de la pédale d'accélération (x_{K} = f(x_{FP})).

15. Procédé selon au moins l'une des revendications 1 à 4, **caractérisé en ce qu'**un rapport de démarrage (G_{A-opt}) adapté à la vitesse de déplacement momentanée (v_{F}) est utilisé comme rapport de démarrage présélectionné et le démarrage avec le rapport de démarrage adapté (G_{A-opt}) est déclenché par l'écoulement (t > t_{w}) d'un intervalle de temps (t_{w}) préalablement fixé.

16. Procédé selon la revendication 15, **caractérisé en ce que** lors d'un actionnement du levier de changement de rapport manuel dans le sens d'un rapport supérieur (x_{SH+} = 1), un changement de rapport du rapport présélectionné vers le rapport de démarrage le plus élevé (G_{A-max}) est déclenché et le démarrage avec le rapport de démarrage le plus élevé (G_{A-max}) s'effectue en combinaison avec l'embrayage immédiat de l'accouplement et en fonction de l'actionnement de la pédale d'accélération (x_{K} = f(x_{FP})).

17. Procédé selon la revendication 15 ou 16, **caractérisé en ce que** lors d'un actionnement du levier de changement de rapport manuel dans le sens d'un rapport inférieur (x_{SH}- = 1), un changement de rapport du rapport présélectionné vers le rapport de démarrage le plus bas (G_{A-min}) est déclenché et le démarrage avec le rapport de démarrage le plus bas (G_{A-min}) s'effectue en combinaison avec l'embrayage immédiat de l'accouplement et en fonction de l'actionnement de la pédale d'accélération (x_{K} = f(x_{FP})).

18. Procédé selon au moins l'une des revendications 1 à 17, **caractérisé en ce que** dans le cas d'une boîte de vitesses qui se trouve initialement au point mort, le rapport de démarrage présélectionné engagé automatiquement et les rapports de démarrage pouvant être engagés par un actionnement du levier de changement de rapport manuel sont affichés sur un afficheur disposé dans le champ de vision du conducteur.
